# FASCICULE DE BREVET EUROPEEN

(11) **EP 4 051 910 B1**
(45) Date de publication et mention de la délivrance du brevet: **09.10.2024**
(21) Numéro de dépôt: 20801327.6
(22) Date de dépôt: 13.10.2020
(51) Int. Cl.: F04D 29/66, F04D 25/06, F16F 15/04, F04D 29/42

(54) **ENSEMBLE MÉCANIQUE POUR VÉHICULE ET DISPOSITIF DE VENTILATEUR POUR VÉHICULE COMPRENANT UN TEL ENSEMBLE MÉCANIQUE**
MECHANISCHE BAUGRUPPE FÜR EIN FAHRZEUG UND LÜFTERVORRICHTUNG FÜR EIN FAHRZEUG MIT EINER SOLCHEN MECHANISCHEN BAUGRUPPE
MECHANICAL ASSEMBLY FOR A VEHICLE AND VENTILATOR DEVICE FOR A VEHICLE COMPRISING SUCH A MECHANICAL ASSEMBLY

(30) Priorité: 28.10.2019 FR 1912085
(43) Date de publication de la demande: 07.09.2022
(73) Titulaire: VALEO SYSTEMES THERMIQUES, 78320 Le Mesnil Saint-Denis (FR)
(72) Inventeur: DEGORCE-DUMAS, Clara, 78320 LE MESNIL SAINT DENIS (FR); KWACZEWSKI, Clémence, 78320 LE MESNIL SAINT-DENIS (FR)
(74) Mandataire: Valeo Systèmes Thermiques
(86) Numéro de dépôt international: PCT/FR2020/051801
(87) Numéro de publication internationale: WO 2021/084178

(56) Documents cités:
- EP-A1- 3 219 350
- FR-A1- 2 606 562
- FR-A1- 3 050 490
- JP-A- 2012 132 432
- JP-A- 2013 209 909
- US-A1- 2005 254 975

## Description

### Domaine technique

La présente description se rapporte à un ensemble mécanique pour véhicule, et à un dispositif de ventilateur comprenant un tel ensemble mécanique, pour une installation de ventilation de véhicule automobile.

### Technique antérieure

Les véhicules automobiles sont couramment équipés d'un dispositif de chauffage, ventilation et/ou climatisation, qui permet de générer un flux d'air. Un tel dispositif permet de gérer la température et la distribution au sein de l'habitacle des véhicules du flux d'air créé. Un tel dispositif de chauffage, ventilation et/ou climatisation comporte, entre autres, un ventilateur comprenant une roue de ventilateur entraînée en rotation par un moteur électrique. Le moteur électrique est notamment à commutation électronique, piloté par un module d'alimentation.

Un moteur électrique à commutation électronique, ou moteur à courant continu sans balai (connu également sous la dénomination anglaise de « brushless »), comporte un ensemble rotor et stator, chacun de ces composants étant porteur d'éléments électromagnétiques dont l'interaction génère le déplacement du rotor relativement au stator, et plus loin le déplacement de la roue de ventilateur.

Le moteur électrique comprend classiquement un rotor externe, un stator interne, fixé à un support du moteur électrique. Un capot est fixé sur le support, pour définir un logement de réception d'une carte électronique de commande du moteur électrique. Classiquement, cette carte électronique comprend différents éléments électroniques qui imposent au capot une forme de cuvette avec au moins un bord ou rebord plan, fixé sur le support moteur, et un fond sensiblement plan. Ce capot est généralement embouti dans une tôle métallique de faible épaisseur.

Cependant, il a été constaté que la rotation du rotor peut créer une excitation mécanique engendrant des vibrations du capot. Le capot peut ainsi produire un bruit dans une gamme de fréquences relativement aigues. Ainsi, lorsque le ventilateur est en fonctionnement, ce bruit peut être gênant pour les passagers du véhicule.

Un but de la présente description est de proposer un tel ensemble mécanique ne présentant pas les inconvénients susmentionnés.

Plus généralement, la présente description vise à proposer une solution au problème évoqué ci-dessus, qui puisse être mise en oeuvre dans le cadre de tout ensemble mécanique comprenant au moins un élément tournant, un support de l'élément tournant et un capot fixé sur le support de l'élément tournant. Les documents JP 2012 132432 A et JP 2013 209909 A montrent des ensembles mécaniques pour véhicule selon le préambule de la revendication indépendante.

### Exposé de l'invention

A cet effet, il est décrit un ensemble mécanique pour véhicule selon la revendication 1, comprenant:
- un élément tournant,
- un support de l'élément tournant, et
- un capot fixé sur le support de l'élément tournant, le capot comprenant au moins un bord fixé sur le support de l'élément tournant et un fond s'étendant sensiblement selon un plan, le fond étant recouvert au moins en partie par du matériau élastomère.

Ainsi, avantageusement, le matériau élastomère permet d'atténuer les émissions vibroacoustiques du fond du capot, excité par la rotation de l'élément tournant, via le support.

De préférence, l'ensemble mécanique comporte une ou plusieurs des caractéristiques suivantes, prises seules ou en combinaison :
- le fond est recouvert par du matériau élastomère, sur sa face interne, orientée vers le support de l'élément tournant, et/ou sur sa face externe, opposée à sa face interne ;
- le matériau élastomère forme au moins une couche d'épaisseur sensiblement constante, l'épaisseur de la couche de matériau élastomère étant de préférence supérieure ou égale à 1 mm et/ou inférieure ou égale à 3 mm, de préférence encore sensiblement égale à 2,5 mm ;
- le matériau élastomère recouvrant au moins en partie le fond du capot est d'un seul tenant ;
- le matériau élastomère est surmoulé sur le fond, le fond présentant de préférence des reliefs pour améliorer la fixation du matériau élastomère surmoulé sur le fond ;
- le matériau élastomère est du SEBS, présentant, de préférence, une dureté supérieure ou égale à 25 shore, de préférence 40 shore, et/ou inférieure ou égale à 60 shore ;

Selon l'invention:
- l'ensemble mécanique comprend en outre une carte électronique de commande de l'élément tournant, le support de l'élément tournant formant avec le capot, un logement de réception de la carte électronique ;
- le support de l'élément tournant a au moins un relief saillant, en contact avec le capot, notamment avec le fond du capot, le relief saillant traversant la carte électronique;
- l'élément tournant est un rotor externe d'un moteur électrique, un stator du moteur électrique étant interposé entre le rotor externe et un relief cylindrique du support de l'élément tournant ;

De préférence, l'ensemble mécanique comporte en outre une ou plusieurs des caractéristiques suivantes, prises seules ou en combinaison:
- le matériau élastomère recouvrant au moins en partie le fond du capot est divisé en plusieurs morceaux ;
- le matériau élastomère recouvre sensiblement tout le fond du capot ;
- le matériau élastomère est collé sur le fond, notamment au moyen d'une colle cyanoacrylate ;
- le support de l'élément tournant est en alliage d'aluminium ou en matériau plastique chargé de particules métalliques ;
- le capot est en alliage d'aluminium ou en matériau plastique chargé de particules métalliques ;
- le support comporte une partie sensiblement plane s'étendant dans un plan perpendiculaire à l'axe de rotation de l'élément tournant ;
- le fond du capot est sensiblement parallèle au support et/ou à la carte électronique de commande ; et
- le capot comporte une ouverture en regard d'un arbre de rotation de l'élément tournant.

Selon un autre aspect, il est proposé un dispositif de ventilateur, en particulier pour installation de ventilation pour véhicule, comprenant un ensemble mécanique tel que décrit ci-avant dans toutes ses combinaisons, dans lesquelles l'élément tournant est un rotor externe d'un moteur électrique, et une roue de ventilateur, entraînée en rotation par le rotor du moteur électrique.

### Brève description des dessins

D'autres caractéristiques, détails et avantages de l'invention apparaîtront à la lecture de la description détaillée ci-après, et à l'analyse des dessins annexés, sur lesquels :
[Fig. 1] représente schématiquement en perspective un dispositif de ventilateur ;

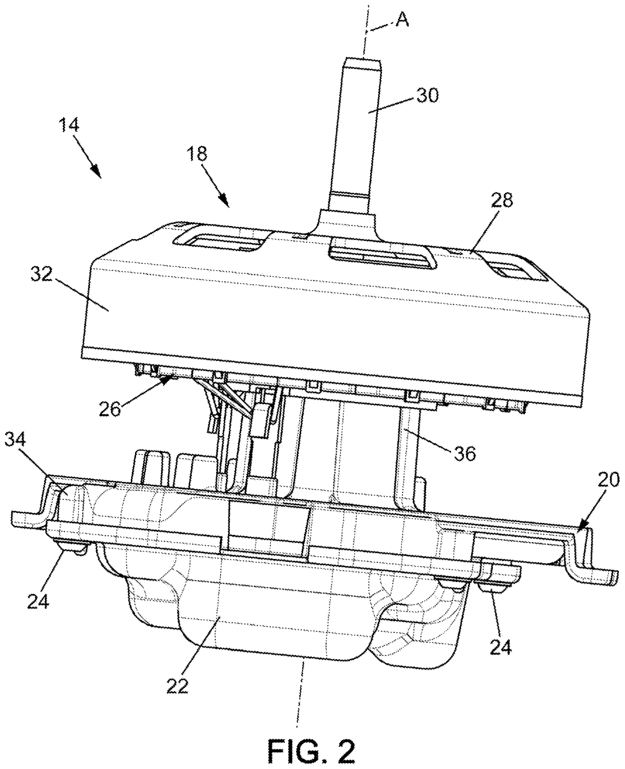

[Fig. 2] est une vue schématique en perspective d'un exemple de moteur pouvant être mis en oeuvre dans le dispositif de ventilateur de la figure 1 ;

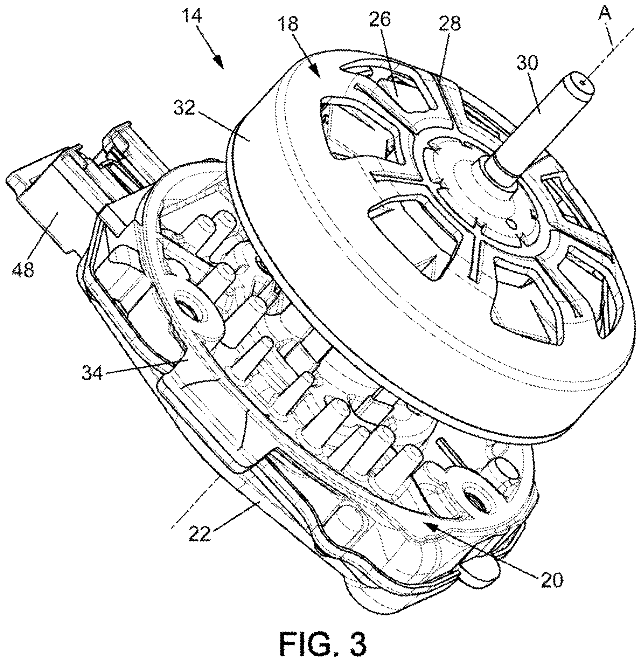

[Fig. 3] est une vue schématique selon une perspective différente, de l'exemple de moteur de la figure 2 ;

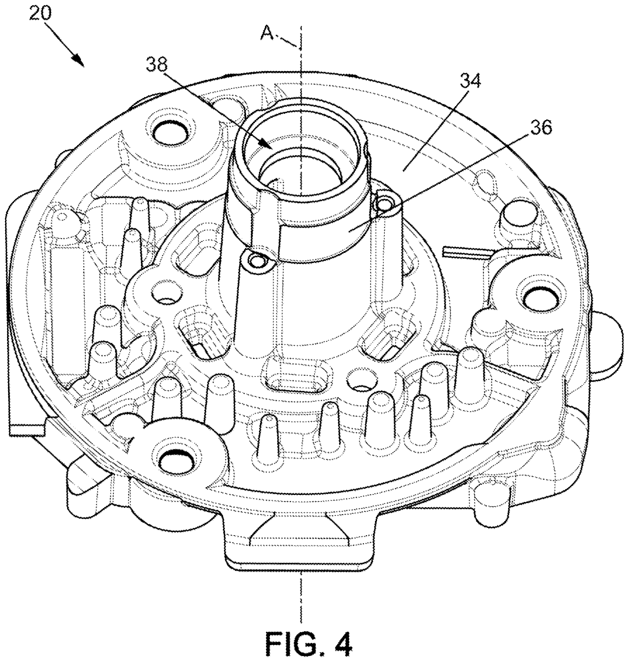

[Fig. 4] est une vue en perspective d'un support de rotor mis en oeuvre dans le moteur des figures 2 et 3 ;
[Fig. 5] est une vue selon une perspective de dessous du moteur des figures 2 et 3, dans lequel le capot du moteur a été retiré ;
[Fig. 6] est une vue selon une perspective de dessous du dispositif de ventilateur de la figure 1 ;
[Fig. 7] illustre schématiquement la face externe du capot du moteur des figures 2 et 3 ; et
[Fig. 8] illustre schématiquement la face interne du capot du moteur des figures 2 et 3.

### Description de modes de réalisation

Dans la suite de la description, les éléments identiques ou de fonction identique portent le même signe de référence. À fin de concision de la présente description, ces éléments ne sont pas décrits en détails dans chaque mode de réalisation. Au contraire, seules les différences entre les variantes de réalisation sont décrites en détails.

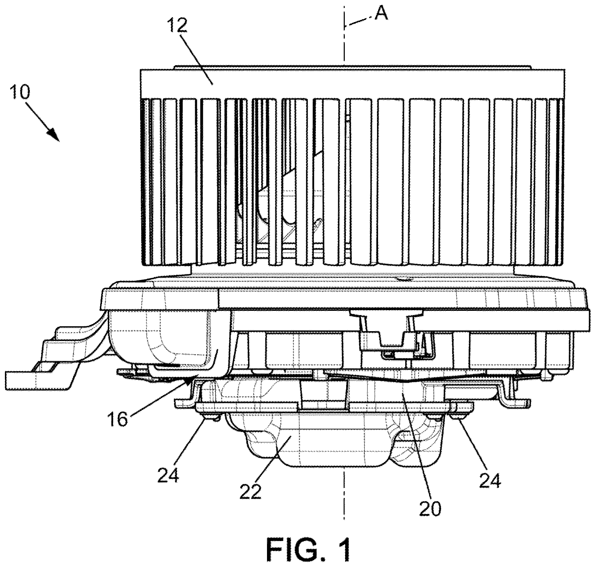

La figure 1 illustre un dispositif de ventilateur 10 pour une installation de ventilation pour véhicule.

Le dispositif de ventilateur 10 comprend essentiellement, tel qu'illustré, une roue de ventilateur 12, un moteur électrique 14, et un support 16 du moteur électrique 14. La roue de ventilateur 12 tourne autour d'un axe de rotation A. Le moteur électrique 14 est destiné à entrainer en rotation autour de son axe A, la roue de ventilateur 12. Le support 16 du moteur 14 est destiné à permettre la fixation du dispositif de ventilateur 10 dans un véhicule automobile, en limitant la transmission des vibrations générées par le moteur électrique 14 et/ou la roue de ventilateur 12 dans le véhicule automobile et/ou des contraintes extérieures vers le moteur électrique 14 et/ou la roue de ventilateur 12. Le support 16 du moteur 14 peut notamment comporter deux bagues coaxiales, d'axe A, reliées entre elles par du matériau élastomère. Notamment, le matériau élastomère peut former une bague de découplage entre la bague interne et la bague externe. La bague interne peut être destinée à être fixée au moteur 14. La bague externe peut être destinée à être fixée à un élément de structure, notamment d'une installation de ventilation de véhicule. Le matériau élastomère est par exemple du polystyrène-b-poly(éthylène-butylène)-b-polystyrène ou SEBS.

Le moteur électrique 14 forme ici un ensemble mécanique comprenant un élément tournant 18, en l'espèce le rotor 18 du moteur 14, un support 20 du rotor 18 et un capot 22, fixé sur le support 20 du rotor 18. Ici, le capot 22 est fixé sur le support 20 du rotor 18 au moyen de vis 24. Bien entendu d'autres moyens de fixation peuvent être mis en oeuvre pour fixer le capot 22 sur le support 20 du rotor 18.

Le rotor 18 est ici un rotor externe. Ainsi, le stator 26 associé au rotor 18 est disposé radialement à l'intérieur du rotor 18. Plus précisément, les aimants 27 du rotor 18 sont radialement à l'extérieur par rapport au bobinage du stator 26.

Le rotor 18 présente une forme de coupelle 28 ajourée, fixée à un arbre 30. La roue de ventilateur 12 est ici fixée directement sur l'arbre 30. Les aimants 27 du rotor 18 sont ici fixés sur la face interne de la coupelle 28, sur une bande cylindrique 32 formée par la coupelle 28.

Le support 20 est par exemple en alliage d'aluminium ou en matériau plastique chargé de particules métalliques.

Le support 20 du rotor 18 présente ici une embase 34. L'embase 34 s'étend ici globalement selon un plan normal à l'axe A de rotation du moteur 14. Un relief 36 sensiblement cylindrique s'étend depuis l'embase 34. Ici, le relief 36 s'étend sensiblement selon la direction de l'axe A de rotation du moteur 14. Le relief 36 est creux. Le relief 36 peut notamment former un ou deux logements 38 recevant chacun une bague de roulement, notamment un roulement à billes, destinée à guider la rotation de l'arbre 30 par rapport au support 20.

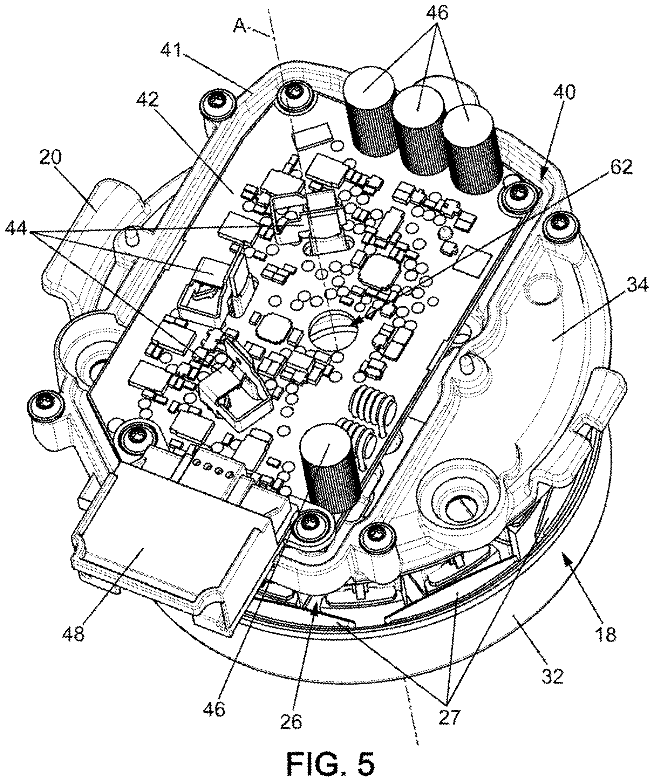

Comme cela est plus particulièrement visible sur la figure 5, l'embase 34 forme sur sa surface opposée au relief cylindrique 36, un renfoncement 40 recevant une carte électronique 42 de commande du moteur 14. Le renfoncement 40 peut être entouré d'un rebord 41 saillant. Différents composants mécatroniques 44, 46 sont fixés sur la carte électronique 42. Notamment, des dispositifs mécaniques 44 permettent de relier des pattes solidaires des bobinages du stator 26 à la carte électronique 42. L'alimentation de ces bobinages via ces pattes, peut alors permettre la commande du moteur électrique 14. Les composants 46 les plus volumineux, notamment les capacités, peuvent également être fixées sur la carte électronique 42, de préférence au voisinage des bords de la carte électronique 42.

Un connecteur 48 est également relié à la carte électronique 42. Le connecteur 48 permet l'alimentation électrique de la carte électronique 42 et, par conséquent, du moteur 14.

Enfin, le capot 22 est fixé sur l'embase 34 du support 20. Le capot 22 définit ici, avec le renfoncement 40 dans l'embase 34, un logement de réception de la carte électronique 42. Le capot 22 comprend ici un bord 50, sensiblement plan, s'étendant selon un plan normal à l'axe A de rotation du moteur 14. Le bord 50 présente des trous 51 permettant la fixation du capot 22 sur l'embase 34 du support 20, au moyen de vis 24. Le capot 22 comprend également un fond 52, distant du bord 50, selon la direction de l'axe A de rotation du moteur 14. Le fond 52 est ici sensiblement plan. Le fond 52 s'étend sensiblement selon un plan, normal à l'axe A de rotation du moteur 14. Le fond 52 du capot 22 est ici sensiblement parallèle à l'embase 34 du support 20. Ici, le fond 52 du capot 22 est également sensiblement parallèle à la carte électronique 42.

Le fond 52 est ici pratiquement totalement recouvert de matériau élastomère. Le matériau élastomère permet d'amortir les oscillations du fond du capot. On limite ainsi les émissions vibroacoustiques du fond 52 du capot 22, excité par la rotation du rotor 18 du moteur. Ceci permet notamment de réduire les émissions sonores du dispositif de ventilateur 10, dans une gamme de fréquences audibles, ressenties comme désagréables par des occupants du véhicule équipé du dispositif de ventilateur 10.

Le capot 22 est par exemple en alliage d'aluminium ou en plastique chargé de particules conductrices, notamment en plastique chargé de particules métalliques.

Il est à noter ici que le capot 22 illustré comprend des bossages 54, 56 périphériques. Ces bossages 54, 56 permettent la réception des dispositifs électroniques 46, les plus volumineux, notamment les plus hauts dans la direction de l'axe A de rotation du moteur 14. Ces bossages 54, 56 ne sont pas, ici, considérés comme faisant partie du fond 52 du capot 22. En effet, on comprend que le fond 52 du capot 22 est la partie centrale du capot 22, par opposition au bord 50, partie centrale qui est sensiblement plane. Les bossages 54, 56, au contraire, du fait de leur forme bombée, ont une tendance limitée à entrer en vibration sous l'effet de l'excitation due à la rotation du rotor 18.

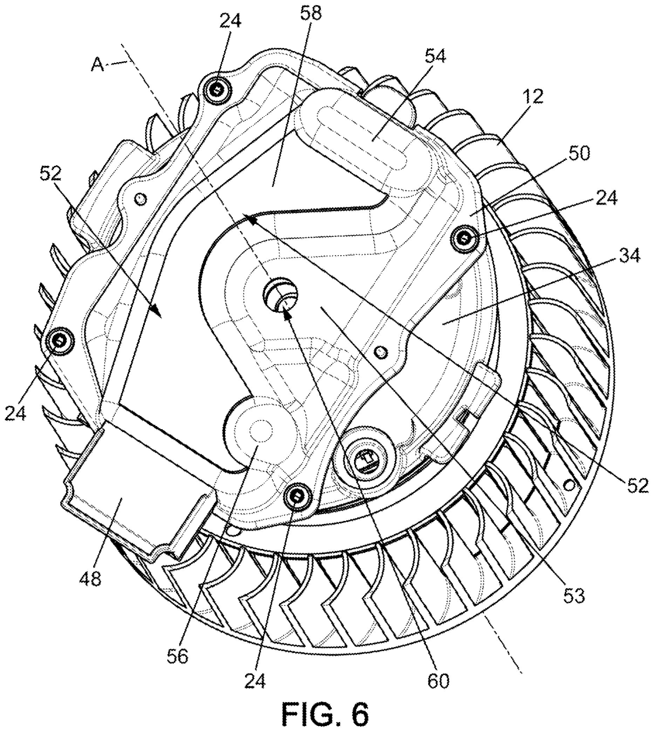

Dans l'exemple illustré sur les figures 6 à 8, notamment, le capot 22 présente également une surface plane 53, plus proche du bord 50 que le fond 52, dans la direction de l'axe A de rotation du moteur 14. Cette surface plane 53, n'est pas non plus considérée comme faisant partie du fond 52 du capot 22. En outre, cette surface plane 53, plus proche du bord 50, vibre nettement moins que le fond 52, de sorte que les émissions vibroacoustiques de cette surface plane 53 sont nettement réduites par rapport aux émissions vibroacoustiques du fond 52 du capot 22.

En pratique, le fond 52 est recouvert au moins en partie par du matériau élastomère. Le fond 52 peut notamment être totalement recouvert de matériau élastomère, pour un meilleur effet de réduction des bruits émis par le capot 22. Cependant, en fonction de la forme particulière d'un capot 22, par exemple, on pourra choisir au contraire de limiter la surface du fond 52 recouverte par du matériau élastomère.

Le matériau élastomère recouvrant au moins en partie le fond 52 du capot 22 peut être d'un seul tenant ou être divisé en plusieurs morceaux séparés. Une pièce de matériau élastomère d'un seul tenant est *a priori* plus facile à réaliser. Une réalisation en plusieurs morceaux séparés permet cependant de mieux s'adapter à des reliefs du capot 22 complexes.

Le matériau élastomère recouvrant le fond 52 du capot 22 est par exemple du polystyrène-b-poly(éthylène-butylène)-b-polystyrène ou SEBS.

Le matériau élastomère peut notamment présenter une dureté supérieure ou égale à 25 shore, de préférence 40 shore, et/ou inférieure ou égale à 60 shore.

Dans l'exemple illustré à la figure 6, le matériau élastomère forme une couche 58, d'épaisseur sensiblement constante. L'épaisseur de la couche 58 de matériau élastomère est par exemple supérieure ou égale à 1 mm et/ou inférieure ou égale à 3 mm, de préférence encore sensiblement égale à 2,5 mm. Une épaisseur plus importante de matériau élastomère permet *a priori* d'obtenir une plus grande réduction du bruit émis par le capot 22. Toutefois, une couche 58 plus fine est moins coûteuse et plus facile à réaliser.

Le matériau élastomère, en couche ou non, peut notamment être surmoulé sur le fond 52 du capot 22. Dans ce cas, il est particulièrement intéressant que le fond 52 du capot présente des reliefs pour améliorer la fixation du matériau élastomère surmoulé sur le fond 52. Ces reliefs peuvent être de dimensions réduites, notamment de l'ordre du millimètre.

Alternativement, le matériau élastomère peut être mis en forme préalablement à la fixation sur le capot 22. Dans ce cas, le ou les morceaux de matériau élastomère peut/peuvent notamment être fixé/s par collage. Une colle cyanoacrylate peut notamment être mise en oeuvre dans ce cas.

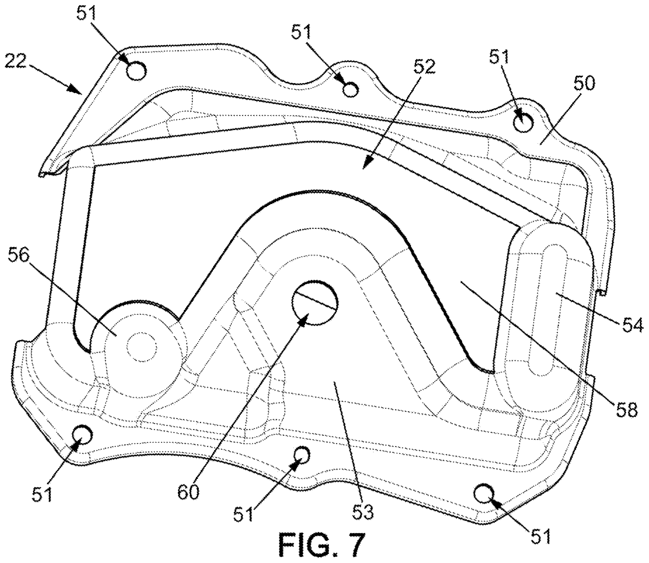

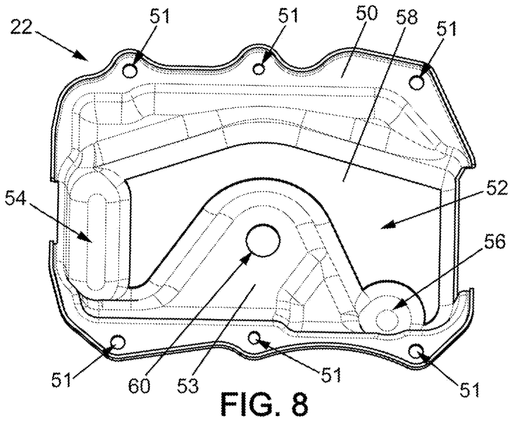

Comme illustré aux figures 6 et 7, le fond 52 du capot 22 peut être recouvert par du matériau élastomère, sur sa face externe. Alternativement ou au surplus, comme illustré à la figure 8, le fond 52 du capot est recouvert de matériau élastomère sur sa face interne, opposée à la face externe et orientée vers le support 20 du rotor 18.

Enfin, comme visible sur les figures, le capot 22 et la carte électronique 42 peuvent comporter chacun une ouverture traversante 60, 62 en regard de l'arbre 30 du rotor 18. Ces ouvertures 60, 62 peuvent permettre le passage d'un contre-appui pour l'arbre 30, permettant l'emmanchement de la roue 12 sur l'arbre 30. L'ouverture 60 dans le capot peut ensuite être refermée, notamment au moyen d'un autocollant. Ceci permet de protéger la carte électronique 42 contre l'humidité de l'air ambiant.

L'invention n'est pas limitée aux exemples de réalisation décrits en regard des figures et d'autres modes de réalisation apparaîtront clairement à l'homme du métier. L'invention est seulement définie par les revendications suivantes.

## Revendications

1. Ensemble mécanique pour véhicule (10), en particulier véhicule automobile, comprenant :
- un élément tournant (18),
- un support (20) de l'élément tournant (18), et
- un capot (22) fixé sur le support (20) de l'élément tournant (18), le capot (22) comprenant au moins un bord (50) fixé sur le support (20) de l'élément tournant (18) et un fond (52) s'étendant sensiblement selon un plan, le fond (52) étant recouvert au moins en partie par du matériau élastomère (58), comprenant en outre une carte électronique (42) de commande de l'élément tournant (18), le support (20) de l'élément tournant (18) formant, avec le capot (22), un logement de réception de la carte électronique (42), l'ensemble mécanique pour véhicule étant **caractérisé en ce que** le support (20) de l'élément tournant (18) a au moins un relief saillant, en contact avec le capot (22), notamment avec le fond (52) du capot (22), le relief saillant traversant la carte électronique (42), et **en ce que** l'élément tournant (18) est un rotor externe d'un moteur électrique (14), un stator (26) du moteur électrique (14) étant interposé entre le rotor externe (18) et un relief cylindrique (36) du support (20) de l'élément tournant (18).

2. Ensemble mécanique selon la revendication 1, dans lequel le fond (52) est recouvert par du matériau élastomère (58), sur sa face interne, orientée vers le support (20) de l'élément tournant (18), et/ou sur sa face externe, opposée à sa face interne.

3. Ensemble mécanique selon la revendication 1 ou 2, dans lequel le matériau élastomère forme au moins une couche (58) d'épaisseur sensiblement constante, l'épaisseur de la couche (58) de matériau élastomère étant de préférence supérieure ou égale à 1 mm et/ou inférieure ou égale à 3 mm, de préférence encore sensiblement égale à 2,5 mm.

4. Ensemble mécanique selon l'une quelconque des revendications 1 à 3, dans lequel le matériau élastomère recouvrant au moins en partie le fond (52) du capot (22) est d'un seul tenant.

5. Ensemble mécanique selon l'une quelconque des revendications précédentes, dans lequel le matériau élastomère est surmoulé sur le fond (52), le fond (52) présentant de préférence des reliefs pour améliorer la fixation du matériau élastomère surmoulé sur le fond (52).

6. Ensemble mécanique selon l'une quelconque des revendications précédentes, dans lequel le matériau élastomère est du SEBS, présentant, de préférence, une dureté supérieure ou égale à 25 shore, de préférence 40 shore, et/ou inférieure ou égale à 60 shore.

7. Dispositif de ventilateur (10), en particulier pour installation de ventilation pour véhicule, comprenant un ensemble mécanique selon l'une quelconque des revendications précédentes et une roue de ventilateur (12), entraînée en rotation par le rotor (18) du moteur électrique (14).

## Patentansprüche

1. Mechanische Baugruppe (10) für ein Fahrzeug, insbesondere ein Kraftfahrzeug, umfassend:
- ein rotierendes Element (18),
- einen Träger (20) des rotierenden Elements (18) und
- eine Haube (22), die am Träger (20) des rotierenden Elements (18) befestigt ist, wobei die Haube (22) mindestens einen Rand (50), der am Träger (20) des rotierenden Elements (18) befestigt ist, und einen Boden (52), der sich im Wesentlichen entlang einer Ebene erstreckt, umfasst, wobei der Boden (52) wenigstens teilweise mit Elastomermaterial (58) bedeckt ist, außerdem eine Elektronikplatine (42) zur Steuerung des rotierenden Elements (18) umfassend, wobei der Träger (20) des rotierenden Elements (18) mit der Haube (22) einen Sitz zur Aufnahme der Elektronikplatine (42) bildet, wobei die mechanische Baugruppe für ein Fahrzeug **dadurch gekennzeichnet ist, dass** der Träger (20) des rotierenden Elements (18) mindestens ein erhabenes Relief aufweist, das sich mit der Haube (22), insbesondere mit dem Boden (52) der Haube (22), in Kontakt befindet, wobei das erhabene Relief die Elektronikplatine (42) durchquert, und dadurch, dass das rotierende Element (18) ein Außenrotor eines Elektromotors (14) ist, wobei ein Stator (26) des Elektromotors (14) zwischen dem Außenrotor (18) und einem zylindrischen Relief (36) des Trägers (20) des rotierenden Elements (18) angeordnet ist.

2. Mechanische Baugruppe nach Anspruch 1, wobei der Boden (52) auf seiner Innenseite, die dem Träger (20) des rotierenden Elements (18) zugewandt ist, und/oder auf seiner Außenseite, die seiner Innenseite gegenüberliegt, mit Elastomermaterial (58) bedeckt ist.

3. Mechanische Baugruppe nach Anspruch 1 oder 2, wobei das Elastomermaterial mindestens eine Schicht (58) von im Wesentlichen konstanter Dicke bildet, wobei die Dicke der Schicht (58) aus Elastomermaterial vorzugsweise größer oder gleich 1 mm und/oder kleiner oder gleich 3 mm ist und noch stärker bevorzugt im Wesentlichen gleich 2,5 mm ist.

4. Mechanische Baugruppe nach einem der Ansprüche 1 bis 3, wobei das Elastomermaterial, das wenigstens einen Teil des Bodens (52) der Haube (22) bedeckt, aus einem Stück ausgebildet ist.

5. Mechanische Baugruppe nach einem der vorhergehenden Ansprüche, wobei das Elastomermaterial auf den Boden (52) aufgeformt ist, wobei der Boden (52) vorzugsweise Reliefs aufweist, um die Befestigung des auf den Boden (52) aufgeformten Elastomermaterials zu verbessern.

6. Mechanische Baugruppe nach einem der vorhergehenden Ansprüche, wobei das Elastomermaterial SEBS ist, das vorzugsweise eine Härte größer oder gleich 25 Shore, vorzugsweise 40 Shore, und/oder kleiner oder gleich 60 Shore aufweist.

7. Lüftervorrichtung (10), insbesondere für eine Lüftungsanlage für ein Fahrzeug, welche eine mechanische Baugruppe nach einem der vorhergehenden Ansprüche und ein Lüfterrad (12), das vom Rotor (18) des Elektromotors (14) drehend angetrieben wird, umfasst.

## Claims

1. Mechanical assembly (10) for a vehicle, in particular a motor vehicle, comprising:
- a rotating element (18),
- a support (20) for the rotating element (18), and
- a cover (22) fixed to the support (20) for the rotating element (18), the cover (22) comprising at least one edge (50) fixed to the support (20) for the rotating element (18) and a bottom (52) extending substantially in a plane, the bottom (52) being covered at least in part by elastomeric material (58), further comprising an electronic board (42) for controlling the rotating element (18), the support (20) for the rotating element (18) forming, with the cover (22), a housing for receiving the electronic board (42), the mechanical assembly for a vehicle being **characterized in that** the support (20) for the rotating element (18) has at least one projecting relief, in contact with the cover (22), in particular with the bottom (52) of the cover (22), the projecting relief passing through the electronic board (42), and **in that** the rotating element (18) is an external rotor of an electric motor (14), a stator (26) of the electric motor (14) being interposed between the external rotor (18) and a cylindrical relief (36) of the support (20) for the rotating element (18).

2. Mechanical assembly according to Claim 1, in which the bottom (52) is covered by elastomeric material (58), on its internal face, oriented towards the support (20) for the rotating element (18), and/or on its external face, opposite to its internal face.

3. Mechanical assembly according to Claim 1 or 2, in which the elastomeric material forms at least one layer (58) of substantially constant thickness, the thickness of the layer (58) of elastomeric material preferably being greater than or equal to 1 mm and/or less than or equal to 3 mm, more preferably substantially equal to 2.5 mm.

4. Mechanical assembly according to any one of Claims 1 to 3, in which the elastomeric material covering at least part of the bottom (52) of the cover (22) is in one piece.

5. Mechanical assembly according to any one of the preceding claims, in which the elastomeric material is overmoulded on the bottom (52), the bottom (52) preferably having reliefs to improve the fixing of the elastomeric material overmoulded on the bottom (52).

6. Mechanical assembly according to any one of the preceding claims, in which the elastomeric material is SEES, preferably having a hardness greater than or equal to 25 Shore, preferably 40 Shore, and/or less than or equal to 60 Shore.

7. Fan device (10), in particular for a ventilation installation for a vehicle, comprising a mechanical assembly according to any one of the preceding claims and a fan impeller (12), driven in rotation by the rotor (18) of the electric motor (14).
